# EUROPEAN PATENT SPECIFICATION

(11) **EP 0 611 384 B1**
(45) Date of publication and mention of the grant of the patent: **01.12.1999**
(21) Application number: 94908845.4
(22) Date of filing: 10.08.1993
(51) Int. Cl.: C08L 27/12, C08L 81/02, C08L 101/00

(54) **COMPOSITION OF FLUOROPOLYMERS**
ZUSAMMENSETZUNG AUS FLUORPOLYMEREN
COMPOSITION DE FLUOROPOLYMERES

(30) Priority: 10.09.1992 GB 9219140
(43) Date of publication of application: 24.08.1994
(73) Proprietor: IMPERIAL CHEMICAL INDUSTRIES PLC, London SW1P 3JF (GB)
(72) Inventor: DAVIES, Mark, Yarm, Cleveland TS15 9RZ (GB); HATTON, Paul Martin, Fullwood, Preston, Lancs PR2 4DN (GB)
(74) Representative: Thomas, Ieuan (GB)
(86) International application number: GB9301690
(87) International publication number: WO9405728

(56) References cited:
- DE-A- 2 531 404

## Description

The present invention relates to a wear-resistant composition comprising polymeric fillers and at least one fluoropolymer.

It is well-known in the art that fluoropolymers, such as homo- and copolymers of tetrafluoroethylene (TFE), have outstanding chemical and physical properties, in particular an extremely low coefficient of friction in dry sliding contact with metal, which make them ideal components in situation which require operation with moving loaded contact, e.g. for shaft bearings or piston rings, under dry conditions, ie without the application of additional fluid lubricant, and/or where the component is required to be as maintenance free as possible over its lifetime under such dry conditions. Examples of these include applications in domestic or commercial machinery (including automotive and/or hydraulic machinery). Such factors have lead to the rapid increase of the use of fluoropolymer compositions in such applications. However, the compositions known hitherto tend to suffer from a disadvantageously high wear rate.

GB-A-1 485 523 discloses a composition comprising 10-80 wt-% of fluorocarbon polymer, 10-80 of polyphenylene sulfide and 10-80 wt-% of an aromatic polysulphone in form of a dry mixture which may be used as a coating on rollers, stirrers or mixers.

During dry sliding contact with a smooth metallic surface such fluoropolymer compositions form a film on the metal surface, and it is this film which dictates the interfacial tribological (frictional and wear) behaviour which is observed.

The film takes a finite sliding distance to equilibrate (known as the "break-in period"), and during break-in the friction and wear rate can each be orders of magnitude higher than at steady state. If the break-in period itself is considerable, the wear during the break-in period can form a significant part of the total.

A reduction in the break-in period would clearly offer an advantage.

It will be seen from the foregoing that there is a need for a fluoropolymer composition which has in particular the combination of
a) an extremely low steady state coefficient of friction in dry sliding contact with metals, together with
b) a very short break-in period before -the steady state coefficient of friction and wear rate is achieved.

Surprisingly, we have now found fluoropolymer composition comprising polymeric fillers which combines the above advantageous properties, and which make them ideal materials for the above mentioned special applications.

Accordingly, the present invention provides a solid fluoropolymer composition which comprises:
a) a non-melt processable fluoropolymer,
b) a poly(arylene sulphide) (hereinafter a PS) and
c) another high aromatic polymer (hereinafter an HAP), at least 50 wt% of which is made up of aromatic moieties, selected from poly(arylene etheretherketone), poly(arylene etherketone), poly(arylene etherether ketoneketone), poly(arylenepropylenearylene etherether ketone), poly(arylene etherethersulphone), poly(arylene ethersulphone), poly(arylenepropylenearylene etherether sulphone), polyimide, polyamidedeimide, polyetherimide, polyimidesulphone, poly(arylene oxide), poly(arylene ketone), poly(arylene sulphone), poly(arylene sulphone) block copolymers and polybenzimidazoles and mixtures thereof;
and wherein the non-melt processable fluoropolymer is present as a sintered matrix and wherein at least the non-melt processable fluoropolymer and the poly(arylene sulphide) have been subjected to a heat treatment prior to sintering and wherein the non-melt processable fluoropolymer provides 30-90 vol. % of the composition, the poly(arylene sulphide) provides up to 40 vol. % of the composition and the aromatic polymer provides up to 30 vol. % of the composition:
and wherein the volume ratio of the poly(arylene sulphide) to the aromatic polymer is in the range of from 5:1 to 1:2.

When used herein HAP means any polymer, at least 50 wt. % preferably at least 65 wt. % and in particular 80 wt. % of which is made up of aromatic moieties.

Together with a very short break-in period and low steady state coefficient of friction and wear rate, the present fluoropolymer composition has excellent resistance to compression creep.

Such materials typically comprise:
a) a polymer main chain of aromatic diradicals, such as phenylene, in particular 1,4-phenylene.
b) linked by functional groups, such as oxy, carbonyl, sulphonyl, sulphonyloxy, amino and imino, and mixtures thereof.

Suitable compositions according to the present invention may comprise up to 40 vol.% of PS, preferably up in 30 vol.%, in particular 2 to 20 vol.%, and up to 30 vol.% of HAP, preferably up to 20 vol. %, in particular 1 to 10 vol. %. (All vol. % herein are relative in the total composition.)

Within the above ranges, the PS and HAP may suitably be present in a volume ratio in the range of from 5:1 to 1:2, e.g. 9:2 to 2:3, preferably 4:1 to 1:1.

The fluoropolymer content of the fluoropolymer composition of the present invention may be as low as 30 vol.%, e.g. as low as 50 vol.%, preferably 60 to 90 vol.%, and in particular 70 to 90 vol.%.

The exact proportions may of course be adjusted by routine trial to achieve the desired balance of frictional and wear properties for any given application. We have found that the proportions referred to in particular above combine an extremely low steady wear rate and low steady state coefficient of friction in dry siding contact, with a short break-in period.

The non-melt processable fluoropolymer content of the composition may consist of one or more non-melt processable fluoropolymers, often of one. This depends however on the desired properties of the composition.

The or each non-melt processable fluoropolymer will typically comprise repeat units derived from at least one fluoroolefin and, optionally, at least one

olefinically unsaturated monomer which is not a fluoroolefin.

Such non-melt processable fluoropolymers may be prepared by conventional fluoropolymer dispersion or suspension polymerisation processes.

Typically the non-melt processable fluoropolymer comprises
a) 30-100 weight% (e.g. 50-100 weight%) of units derived from the fluoroolefin, and
b) 0-70 weight% (e.g. 50-0 weight%) of other units (ie not derived from a fluoroolefin).

The fluoroolefin is broadly defined as an olefin having at least one fluorine atom substituent. Preferably the fluoroolefin is a perhaloolefin in which all the hydrogen atoms of the olefin are substituted with fluorine atoms and optionally other halogen atoms.

From the point of view of ease of production and resulting polymer properties fluoroolefins having 2 or 3 carbon atoms are preferable.

Examples of such fluoroolefins include
a) fluoroethylenes such as CF₂=CF₂, CH₂=CF₂, CH₂=CHF, CClF=CF₂, CCl₂=CF₂, CClF=CClF, CHF-CCl₂, CH₂=CClF, and CCl₂=CClF; and
b) fluoropropylenes such as CF₃CF=CF₂, CF₃CF=CHF, CF₃CH=CF₂, CF₃CH=CH₂, CF₃CH=CH₂, CHF₂CH=CHF, and CF₃CH=CH₂.

Of the fluoroethylenes and fluoropropylenes listed above tetrafluoroethylene (CF₂=CF₂) ("TFE"), chlorotrifluoroethylene (CClF=CF₂) ("CTFE"), vinylidene fluoride (CH₂=CF₂) ("VDF"), and hexafluoropropylene (CF₂=CFCF₃) ("HFP") are particularly preferred.

Examples of non-fluoroolefins as comonomers include, particularly, perfluoro(alkyl vinyl ethers) ("PAVE's").

Examples of such ethers include perfluorolpropyl vinyl ether) ("PPVE"), and perfluoroalkyl dioxoles) such as perfluoro(2,2-dimethyl-1,3-dioxole) ("PDD").

In principle the composition of the present invention may comprise any type of fluoropolymer; however, the advantages afforded by its use are more significant for non-melt processable fluoropolymers.

These include polymers much as PTFE (homopolymer), or copolymers of TFE with monomers selected from other fluoroethylenes. Such compositions have to be produced by sintering granulates or coagulated dispersions.

Copolymers of TFE/PPVE having 2 to 5 weight% PPVE (e.g. 2 to 4 weight% PPVE, typically 3 weight%) are also useful. The fluoropolymer may thus e.g. be PTFE, PTFE-HFP copolymer, polyCTFE, or a TFE-PAVE copolymer.

Examples of such fluoropolymers include, preferably, PTFE, in particular Fluon G163, G580, G108 or G190 (Fluon is a Registered trade mark, of ICI).

The non-melt processable fluoropolymer(s) in the composition precursor used to prepare the composition, e.g. by sintering or melting the fluoropolymer(s), will conveniently be in granular or coagulated dispersion form, and depending on the type of the fluoropolymer(s), the composition will comprise an unsintered granulate or a particulate sinter of the non-melt processable fluoropolymer(s), and/or melted matrix.

Non-melt processable Fluoropolymer(s), especially PTFE, with a mean particle size which is less than 60 µm, e.g. 10 to 50 µm, in particular 15 to 35 µm will be suitable.

The arylene moiety in the PS is often phenylene, in particular 1,4-phenylene.

The PS may be linear or branched-chain and may be any PS, irrespective of the route by which it may have been prepared or processed.

The main PS of interest in the compositions of the present invention is one based on poly(1,4-phenylene sulphide), whether linear or branched-chain.

Examples of HAP's which may be used in the present compositions include poly(arylene etheretherketone) PEEK), poly(arylene etherketone) (PEK) and poly(arylene etherether ketone ketone) (PEEKK), and polylarylenepropylene-aryleneetherether ketone) (PEDEK), and mixtures thereof.

Examples of HAP's which may be used in the compositions of the present invention also include poly(arylene etheretheraulphone) (PEES), poly(arylene ethersulphone) (PES), poly(arylenepropylenearylene etherether sulphone) (PEDES), and mixtures thereof.

Examples of HAP's which may be used in the compositions of the present invention further include polyimide (P1), polyamideimide (PAI), polyetherimide (PEI), polyimidesulphone (PIS), poly(arylene oxide) (PO), poly(arylene ketone), poly(arylene sulphone) poly(arylene sulphone) block copolymers, and polybenzimidazole, and mixtures thereof.

Mixtures of all the foregoing classes of HAP's may be used.

The arylene moiety in the foregoing HAP's is often phenylene, in particular 1,4-phenylene.

The HAP may be linear or branched-chain in the composition of the present invention.

The HAP's of greatest interest among the foregoing HAP's are PI, PEEK and PEI, in particular those based on 1,4-phenylene.

These HAP's may also be linear or branched-chain.

The PS and HAP will typically be incorporated into the preparative precursor of the composition of the present invention as a particulate solid.

Each will thus often be present in the composition as a particulate filler in a sintered or melted matrix of fluoropolymer(s), depending on the physical properties of the latter.

The PS and HAP particles may range in mean size from 5 to 80 µm, e.g. 10 to 60 µm, in particular 20 to 50 µm.

The most suitable size, depending on the nature of the material and the desired properties of the composition, may be determined by routine trial.

Most forms of the PS and most of the foregoing HAP's will be present in the composition of the present invention in a form which has been heat treated.

The mutual addition and initial blending is typically made at a temperature of usually 0 to 100°C (e.g. 10 to 70°C, particularly 15 to 50°C).

The mixture is then held at a temperature (or varying temperature range) typically within the range 200°C-400°C.

The temperature and time period and the order and timing of component additions for the thermal treatment is usually specific to and critical for each component, and e.g. the temperature may vary outside the above range, and the time may vary from "zero time", ie no dwell at "on temperature", to 24 hours or more at the necessary temperature or temperature range, and/or other composition components added subsequently to the heat treatment.

In the case of the PS, for example, the procedure may involve dry blending the fluoropolymer(s) and PS together, heat treating the blend for up to 24 hr., followed by remixing prior to blending with the HAP.

In certain cases, e.g. where the HAP is PI, all the components may as an alternative be initially dry mixed and then heat treated together, followed by comminution prior to fabrication.

Blending may be carried out conventionally, e.g. in a Henschel mixer, a tumble mixer or a Littleford blender, or through a hammer mill.

Accordingly, the present invention provides a process for preparing a composition according to Claim 1 which comprises the Steps of:
A) dry blending the non-melt processable fluoropolymer(s) and the polyarylene sulphide as particulates;
B) heat treating the dry blend of fluoropolymer(s) and the polyarylene sulphide prepared in Step A:
C) adding the high aromatic polymer to the product from Step B: and
D) heating the blend prepared in Step C to a temperature or varying temperature range sufficient to sinter the non-melt processable fluoropolymer(s) to form a matrix of non-melt processable fluoropolymer(s).

Accordingly, the present invention further provides a process for preparing a composition according to Claim 1 which comprises the Steps of
A) dry blending the non-melt processable fluoropolymer(s), the polyarylene sulphide and the high aromatic polymer as particulates:
B) heat treating the blend; and
C) heating the blend prepared in Step B to a temperature or varying temperature range sufficient to sinter the non-melt processable fluoropolymer(s) to form a matrix of non-melt processable fluoropolymer(s).

In addition to conventional additives for such a fluoropolymer composition, such as pigments and processing aids, the composition may comprise additives known to confer a good steady state wear rate in dry sliding contact.

Accordingly, the present invention further provides the use of a solid fluoropolymer according to Claim 1 in or as a component in dry sliding moving loaded contact with metal.

Accordingly, the present invention further provides a component of commercial or domestic machinery comprising a solid fluoropolymer composition as claimed in Claim 1.

Examples include any of the following or any combination thereof, as up to 50 vol.% of the composition, e.g. up to 25 vol.%, preferably up to 10 vol.%:
carbon such as carbon fibre and powder, graphites (including electrographitised carbon and flaky graphite, the latter e.g. having a size of less than 300 mesh end/or containing more than 95 wt.% fixed carbon, and coke flours;
glass fibre and powder;
metal powders, much as stainless steel, nickel and bronze powders;
ceramic fibres and powders;
metal chalcogenides, such as molybdenum disulphide and aluminium hydroxide/hydrated aluminium oxide fibre and powder; calcium fluoride; and
siliceous fillers, such as wollastonite (calcium metasilicate), aluminium silicate and mica,.

The present invention is now illustrated by reference to the following Example.

### Example

All the PTFE compositions prepared and evaluated and their components are listed in Table 1 below.

All were based on Fluon grade G163 (Fluon is a Registered trade mark, of ICI) PTFE, which in its unprocessed form is a granular powder with an average particle size of 25 µm.

The compositions were prepared by dry blending of the components as particulates in a Henschel mixer.

Each composition is heat treated after the initial blending for 8 to 24 hr. at 290 to 320°C, end then reblended before subsequent conventional sintering into discs of thickness 5 mm.

The discs were then machined into square prisms of 5 mm side for frictional and wear evaluation.

**Table 1**

| Composition | PS vol.% | HAP | vol.% |
|---|---|---|---|
| 1 | 15 | PI | 5 |
| 2 | 8 | PI | 2 |
| 3 | 5 | PI | 5 |
| 4 | 5 | PEEK | 5 |
| 5 | 30 | PI | 10 |

In Table 1:
the PS is Ryton P4 (Registered trade mark, Phillips Petroleum); The PI is polyimide Lenzing P84 (Registered trade mark Lenzing AG); and the PEEk used is Victrex 150P (Registered trade mark, ICI), c.35µm.

The frictional and wear tests were performed using an apparatus which is essentially that described in Surface and Interface Analysis, 18, 1992, 303-305. This uses a pin on EN8 steel or LM24 aluminium under dry conditions at room temperature.

The apparatus for such a test comprises a pivoted lever arm bearing the test specimen near one end.

The specimen is biased into normal contact with the edge face of a rotating metal disc (here of EN8 steel) by a constant load applied to the other end of the lever arm.

Periodically the rotating disc is stopped, the specimen is removed, the mass loss of the specimen (due to wear at the contact surface with the disc) is determined. The test procedure is then resumed, optionally until the specimen is fully worn away.

Prior to the present testing the steel counterfaces were re-finished to a roughness of 0.1µm Ra, and the specimens and counter faces were thoroughly degreased.

The speed of rotation of the steel ring was set so as to achieve an interfacial sliding speed of 1 m.s-1. a load of 1 mPa was applied continuously during sliding.

The specific wear rate was plotted as a function of time, hence determining when a steady state. The friction coefficient µ was also determined during these tests.

For each composition, four independent tests were carried out simultaneously, to produce the mean values in Table 2

**Table 2**

| Composition | Steady state Wear Rate (m3. Nm-1 × 10⁻¹⁶) | Friction Coefficient µ | Break-in Period Km |
|---|---|---|---|
| 1 | 2.1 | 0.24 | 5 |
| (error ± 15%) | | | |

The compositions were found to have a short break-in period, which clearly offers the advantages set out hereinbefore over the related compositions known hitherto.

## Claims

1. A solid fluoropolymer composition which comprises:
a) a non-melt processable fluoropolymer,
b) a poly(arylene sulphide) and
c) another high aromatic polymer, at least 50 wt. % of which is made up of aromatic moieties, selected from poly(arylene etheretherketone), poly(arylene etherketone), poly(arylene etherether ketoneketone), poly(arylenepropylenearylene etherether ketone), poly(arylene etherethersulphone), poly(arylene ethersulphone), poly(arylenepropylenearylene etherether sulphone), polyimide, polyamideimide, polyetherimide, polyimidesulphone, poly(arylene oxide), poly(arylene ketone), poly(arylene sulphone), poly(arylene sulphone) block copolymers and polybenzimidazoles and mixtures thereof;
and wherein the non-melt processable fluoropolymer is present as a sintered matrix and wherein at least the non-melt processable fluoropolymer and the poly(arylene sulphide) have been subjected to a heat treatment prior to sintering and wherein the non-melt processable fluoropolymer provides 30-90 vol. % of the composition, the poly(arylene sulphide) provides up to 40 vol. % of the composition and the aromatic polymer provides up to 30 vol. % of the composition:
and wherein the volume ratio of the poly(arylene sulphide) to the aromatic polymer is in the range of from 5:1 to 1:2.

2. A composition according to claim 1 wherein at least 80 wt. % of the high aromatic polymer is made up of aromatic moieties.

3. A composition according to claim 1 wherein the polyarylene sulphide is a linear or branched chain poly(1,4-phenylene sulphide).

4. A composition according to claim 3 which comprises 2 to 20 vol. % of linear or branched-chain poly(1,4-phenylene sulphide), 1 to 10 vol. % of high aromatic polymer and 70-90 vol. % of fluoropolymer(s) relative to the total composition and the poly(1,4-phenylene sulphide) and the high aromatic polymer are present in a volume ratio in the range of from 4:1 to 1:1

5. A composition according to claim 1 wherein the poly(arylene sulphide) and the high aromatic polymer are present in the solid fluoropolymer composition as a particulate filler with particles of mean size from 20 to 50 µm in a sintered matrix of fluoropolymer(s).

6. A composition according to claim 1 wherein the sintered matrix is prepared from non-melt processable fluoropolymer(s) with a mean particle size which is 15 to 35 µm.

7. A composition according to claim 1 wherein the high aromatic polymer is a polyimide, polyetherimide or a poly(arylene etheretherketone) based on 1,4-phenylene, or a mixture thereof.

8. A composition according to claim 1 wherein the non-melt fluoropolymer(s) is processable are copolymer(s) of at least one fluoro-olefin which is a perhaloolefin having 2 or 3 carbon atoms and optionally, at least one olefinically unsaturated monomer which is not fluoroolefin, having 3 to 10 carbon atoms, nor a perfluoroalkyl vinyl ether of 3 to 10 carbon atoms and which comprises
a) 30-100 weight % (e.g. 50-100 weight %) of units derived from the perhaloolefin and
b) 0-70 weight % (e.g. 50.0 weight %) of the other units which are not a fluoroolefin.

9. A composition according to claim 1 wherein up to 10 vol. % of the composition consists of an additive which is carbon: glass fibre or powder, metal powder; ceramic fibres and powders; metal chalcogenide; calcium fluoride; or a siliceous filler, or any combination thereof.

10. A process for preparing a composition according to Claim 1 which comprises the Steps of:
A) dry blending the non-melt processable fluoropolymer(s) and the polyarylene sulphide as particulates;
B) heat treating the dry blend of fluoropolymer(s) and the polyarylene sulphide prepared in Step A;
C) adding the high aromatic polymer to the product from Step B; and
D) heating the blend prepared in Step C to a temperature or varying temperature range sufficient to sinter the non-melt processable fluoropolymer(s) to form a matrix of non-melt processable fluoropolymer(s).

11. A process for preparing a composition according to Claim 1 which comprises the Steps of
A) dry blending the non-melt processable fluoropolymer(s); the polyarylene sulphide and the high aromatic polymer as particulates;
B) heat treating the blend; and
C) heating the blend prepared in Step B to a temperature or varying temperature range sufficient to sinter the non-melt processable fluoropolymer(s) to form a matrix of non-melt processable fluoropolymer(s).

12. The use of a solid fluoropolymer composition according to Claim 1 in or as a component in dry sliding moving loaded contact with metal.

13. A component of commercial or domestic machinery comprising a solid fluoropolymer composition as claimed in Claim 1.

## Patentansprüche

1. Eine feste Fluorpolymer-Zusammensetzung, die umfaßt:
a) ein nicht als Schmelze zu verarbeitendes Fluorpolymer,
b) ein Poly(arylensulfid) und
c) ein anderes hocharomatisches Polymer, das zu wenigstens 50 Gew.-% aus aromatischen Einheiten hergestellt ist, die ausgewählt sind aus Poly(arylenetheretherketon), Poly(arylenetherketon), Poly(arylenetheretherketonketon), Poly(arylenpropylenarylenetheretherketon), Poly(arylenetherethersulfon), Poly(arylenethersulfon), Poly(arylenpropylenarylenetherethersulfon), Polyimid, Polyamidimid, Polyetherimid, Polyimidsulfon, Poly(arylenoxid), Poly(arylenketon), Poly(arylensulfon), Poly(arylensulfon) -Blockcopolymeren und Polybenzimidazolen und Mischungen davon;
und bei der das nicht als Schmelze zu verarbeitende Fluorpolymer als eine gesinterte Matrix vorhanden ist, und bei der wenigstens das nicht als Schmelze zu verarbeitende Fluorpolymer und das Poly(arylensulfid) vor dem Sintern einer Wärmebehandlung unterzogen wurden, und bei der das nicht als Schmelze zu verarbeitende Fluorpolymer 30-90 Vol.-% der Zusammensetzung ausmacht, das Poly(arylensulfid) bis zu 40 Vol.-% der Zusammensetzung ausmacht und das aromatische Polymer bis zu 30 Vol.-% der Zusammensetzung ausmacht;
und bei der das Volumenverhältnis des Poly(arylensulfids) zu dem aromatischen Polymer im Bereich von 5:1 bis 1:2 liegt.

2. Zusammensetzung nach Anspruch 1, bei der wenigstens 80 Gew.-% des hocharomatischen Polymers von aromatischen Einheiten gebildet wird.

3. Zusammensetzung nach Anspruch 1, bei der das Polyarylensulfid ein Poly(1,4-phenylensulfid) mit linearer oder verzweigter Kette ist.

4. Zusammensetzung nach Anspruch 3, die 2 bis 20 Vol-% eines Poly(1,4-phenylensulfids) mit linearer oder verzweigter Kette, 1 bis 10 Vol.-% des hocharomatischen Polymers und 70-90 Vol.-% von Fluorpolymer(en), bezogen auf die Gesamtzusammensetzung, umfaßt, und bei der das Poly(1,4-phenylensulfid) und das hocharomatische Polymer in einem Volumenverhältnis im Bereich von 4:1 bis 1:1 vorhanden sind.

5. Zusammensetzung nach Anspruch 1, bei der das Poly(arylensulfid) und das hocharomatische Polymer in der festen Fluorpolymer-Zusammensetzung als ein partikulärer Füllstoff mit Teilchen mit einer Durchschnittsgröße von 20 bis 50 µm in einer gesinterten Matrix von Fluorpolymer(en) vorliegen.

6. Zusammensetzung nach Anspruch 1, bei der die gesinterte Matrix hergestellt wird aus (einem) nicht als Schmelze zu verarbeitenden Fluorpolymer(en) mit einer Durchschnittsteilchengröße, die 15 bis 35 µm beträgt.

7. Zusammensetzung nach Anspruch 1, bei der das hocharomatische Polymer ein Polyimid, ein Polyetherimid oder ein Poly(arylenetheretherketon), das auf 1,4-Phenylen basiert, oder eine Mischung davon ist.

8. Zusammensetzung nach Anspruch 1, bei der das/die nicht als Schmelze zu verarbeitende(n) Fluorpolymer(e) (ein) Copolymer(e) von wenigstens einem Fluor-Olefin, das ein Perhalogenolefin mit 2 oder 3 Kohlenstoffatomen ist, und gegebenenfalls wenigstens einem olefinisch ungesättigten Monomer ist, das weder ein Fluorolefin mit 3 bis 10 Kohlenstoffatomen noch ein Perfluoralkylvinylether mit 3 bis 10 Kohlenstoffatomen ist/sind, die umfaßt
a) 30-100 Gew.-% (zum Beispiel 50-100 Gew.-%) Einheiten, die sich von dem Perhalogenolefin ableiten, und
b) 0-70 Gew.-% (zum Beispiel 50-0 Gew.-%) von den anderen Einheiten, die kein Fluorolefin sind.

9. Zusammensetzung nach Anspruch 1, bei der bis zu 10 Vol.-% der Zusammensetzung aus einem Zusatzstoff bestehen, der Kohlenstoff; Glasfaser oder -pulver; Metallpulver; keramische Fasern und Pulver; Metallchalkogenid; Calciumfluorid; oder ein siliciumhaltiger Füllstoff ist, oder irgendeine Kombination davon.

10. Verfahren zum Herstellen einer Zusammensetzung nach Anspruch 1, das die Stufen umfaßt:
A) Trockenvermischen des/der nicht als Schmelze zu verarbeitenden Fluorpolymers/Fluorpolymere und des Polyarylensulfids als Partikel;
B) Wärmebehandlung des in Stufe A hergestellten Dry-Blends des Fluorpolymers/der Fluorpolymere und des Polyarylensulfids;
C) Zugeben des hocharomatischen Polymers zu dem Produkt von Stufe B; und
D) Erwärmen des in Stufe C hergestellten Blends auf eine Temperatur oder auf einen Bereich variierender Temperatur, die/der ausreichend ist, um das/die nicht als Schmelze zu verarbeitende(n) Fluorpolymer(e) zu sintern, um eine Matrix aus (einem) nicht als Schmelze zu verarbeitenden Fluorpolymer(en) zu bilden.

11. Verfahren zur Herstellung einer Zusammensetzung nach Anspruch 1, das die Stufen umfaßt
A) Trockenvermischung des/der nicht als Schmelze zu verarbeitenden Fluorpolymers/Fluorpolymere, des Polyarylensulfids und des hocharomatischen Polymers als Partikel;
B) Wärmebehandlung des Blends; und
C) Erwärmen des in Stufe B hergestellten Blends auf eine Temperatur oder auf einen Bereich variierender Temperatur, die/der ausreichend ist, um das/die nicht als Schmelze zu verarbeitende(n) Fluorpolymer(e) zu sintern, um eine Matrix aus (einem) nicht als Schmelze zu verarbeitenden Fluorpolymer(en) zu bilden.

12. Verwendung einer festen Fluorpolymer-Zusammensetzung nach Anspruch 1 in oder als lastaufnehmendes Bauteil für einen trocken gleitenden Bewegungskontakt mit einem Metall.

13. Bauteil einer industriellen Maschine oder einer Haushaltsmaschine, das eine feste Fluorpolymerzusammensetzung nach Anspruch 1 umfaßt.

## Revendications

1. Composition de fluoropolymère solide qui comprend :
a) un fluoropolymère non apte au traitement par fusion ;
b) un poly(sulfure d'arylène) et
c) un autre polymère hautement aromatique, dont au moins 50% en poids sont constitués de parties aromatiques, choisies parmi les suivantes : poly(étheréthercétone d'arylène), poly(éthercétone d'arylène), poly(étheréthercétonecétone d'arylène), poly(étheréthercétone d'arylènepropylènearylène), poly(étheréthersulfone d'arylène), poly(éthersulfone d'arylène), poly(étheréthersulfone d'arylènepropylènearylène), polyimide, polyamideimide, polyétherimide, polyimidesulfone, poly(oxyde d'arylène), poly(cétone d'arylène), poly(sulfone d'arylène), copolymères bloc de poly(sulfone d'arylène) et des polybenzimidazoles et mélanges de ceux-ci ;
et où le fluoropolymère non apte au traitement par fusion est présent comme matrice frittée
et où au moins le fluoropolymère non apte au traitement par fusion et le poly(sulfure d'arylène) ont été soumis à un traitement à chaud avant le frittage
et où le fluoropolymère non apte au traitement par fusion fournit 30-90% en volume de la composition, le poly(sulfure d'arylène) fournit jusqu'à 40% en volume de la composition et le polymère aromatique fournit jusqu'à 30% en volume de la composition ;
et où le rapport en volume du poly(sulfure d'arylène) au polymère aromatique est dans l'intervalle de 5:1 à 1:2.

2. Composition selon la revendication 1 dans laquelle au moins 80% en poids du polymère hautement aromatique sont constitués de parties aromatiques.

3. Composition selon la revendication 1 dans laquelle le poly(sulfure d'arylène) est un poly(sulfure de 1,4-phénylène) à chaîne linéaire ou ramifiée.

4. Composition selon la revendication 3 qui comprend 2 à 20% en volume de poly(sulfure de 1,4-phénylène) à chaîne linéaire ou ramifiée, 1 à 10% en volume de polymère hautement aromatique et 70-90% en volume de fluoropolymère(s) par rapport à la composition totale et le poly(sulfure de 1,4-phénylène) et le polymère hautement aromatique sont présent dans un rapport en volume dans l'intervalle de 4:1 à 1:1.

5. Composition selon la revendication 1 dans laquelle le poly(sulfure d'arylène) et le polymère hautement aromatique sont présents dans la composition de fluoropolymère solide comme charge particulaire avec des particules de taille moyenne de 20 à 50 µm dans une matrice frittée de fluoropolymères.

6. Composition selon la revendication 1 dans laquelle la matrice frittée est préparée à partir de fluoropolymère(s) non apte(s) au traitement par fusion avec une taille particulaire moyenne qui est de 15 à 35 µm.

7. Composition selon la revendication 1 dans laquelle le polymère hautement aromatique est un polyimide, un polyétherimide ou un poly(étheréthercétone d'arylène) à base de 1,4-phénylène ou un mélange de ceux-ci.

8. Composition selon la revendication 1 dans laquelle le(s) fluoropolymère(s) non apte(s) au traitement par fusion est (sont) un (des) copolymère(s) d'au moins une fluorooléfine qui est une perhalooléfine ayant 2 ou 3 atomes de carbone et facultativement, au moins un monomère oléfiniquement insaturé qui n'est pas une fluorooléfine, ayant 3 à 10 atomes de carbone, ni un perfluoroalkylvinyléther de 3 à 10 atomes de carbone, et qui comprend :
a) 30-100% en poids (par exemple, 50-100% en poids) d'unités dérivées de la perhalooléfine ; et
b) 0-70% en poids (par exemple, 50-0% en poids) des autres unités qui ne sont pas une fluorooléfine.

9. Composition selon la revendication 1 dans laquelle jusqu'à 10% en volume de la composition consiste en un additif qui est du carbone ; de la fibre ou poudre de verre ; de la poudre métallique ; des fibres ou poudres céramiques ; du chalcogénure métallique ; du fluorure de calcium ; ou une charge siliceuse, ou toute combinaison de ceux-ci.

10. Procédé de préparation d'une composition selon la revendication 1 qui comprend les étapes de :
A) mélange à sec du (des) fluoropolymère(s) non apte(s) au traitement par fusion et du poly(sulfure d'arylène) sous forme particulaire ;
B) traitement à chaud du mélange sec de fluoropolymère(s) et du poly(sulfure d'arylène) préparé dans l'étape A ;
C) addition du polymère hautement aromatique au produit de l'étape B ; et
D) chauffage du mélange préparé dans l'étape C à une température ou dans un intervalle de température variable suffisant pour fritter le(s) fluoropolymère(s) non apte(s) au traitement par fusion pour former une matrice de fluoropolymère(s) non apte(s) au traitement par fusion.

11. Procédé de préparation d'une composition selon la revendication 1 qui comprend les étapes de
A) mélange à sec du (des) fluoropolymère(s) non apte(s) au traitement par fusion, du poly(sulfure d'arylène) et du polymère hautement aromatique sous forme particulaire ;
B) traitement à chaud du mélange ; et
C) chauffage du mélange préparé dans l'étape B à une température ou dans un intervalle de température variable suffisant pour fritter le(s) fluoropolymère(s) non apte (s) au traitement par fusion pour former une matrice de fluoropolymère(s) non apte(s) au traitement par fusion.

12. Utilisation d'une composition de fluoropolymère solide selon la revendication 1 dans ou comme composant dans le contact de charge variable à glissement sec avec un métal.

13. Composant de machines commerciales ou domestiques comprenant une composition de fluoropolymère solide selon la revendication 1.
